# EUROPEAN PATENT APPLICATION

(11) **EP 4 303 522 A1**
(43) Date of publication of application: **10.01.2024**
(21) Application number: 22183865.9
(22) Date of filing: 08.07.2022
(51) Int. Cl.: F28F 9/02, B60K 11/08, F03D 80/60, F24F 13/14, F28F 27/02

(54) **AIR INTAKE DAMPER**

(71) Applicant: Nissens Cooling Solutions A/S, 8700 Horsens (DK)
(72) Inventor: Kilian, Allan, 8700 Horsens (DK)
(74) Representative: Dragsted Partners A/S

(57) **Abstract**

An air intake damper, comprising: a first air intake conduit having a first longitudinal axis and having an upstream end and a downstream end, the first intake conduit having a first intake area, where the first intake area is substantially perpendicular to the first longitudinal axis, a plurality of partitions extending across the first intake area, where each partition has at least an upstream end and a downstream end and has an first surface and/or an second surface, where in a first position two adjacent partitions are positioned to define a first fluid communication channel having an upstream end and a downstream end extending along the first air intake conduit, where the fluid communication channel in a direction extending along the first longitudinal axis has at least one bend so that an imaginary straight line extending from the upstream end to the downstream end will intersect at least the first surface and/or the second surface of at least one partition.

## Description

### Technical field

An air intake damper, comprising: a first air intake conduit having a first longitudinal axis and having an upstream end and a downstream end, the first intake conduit having a first intake area, where the first intake area is substantially perpendicular to the first longitudinal axis, a plurality of partitions extending across the first intake area, where each partition has at least an upstream end and a downstream end.

### Description

A heat exchanger is a system used to transfer heat between two or more fluids, where heat exchangers are used in both cooling and heating processes. Heat exchangers are often used in large mechanical constructions, where the heat exchangers may be utilised to provide cooling to one or more fluids that are utilised in the mechanical constructions. An example of such construction may e.g. be a wind turbine, where the wind turbine has a plurality of moving parts, where the moving parts have to be lubricated. The wind turbine may be provided with a cooling fluid, where the cooling fluid may be utilised for cooling the mechanical driveline, the converter, the transformer or any part of the wind turbine that needs to be cooled.

The cooling fluid may be fed to a heat exchanger, where the heat exchanger is often arranged outside the wind turbine, where heat exchangers may be provided on an outer surface of the nacelle or may be arranged on the wind turbine tower. Thus, the heat exchanger may be positioned in a position where ambient air may be utilised to pass through the heat exchanger to allow the heat from the cooling fluid to be transferred to the ambient air.

A wind turbine may be positioned in a vast variety of environments, where land-based wind turbines and offshore wind turbines are commonly used. Thus, the condition of the ambient air may differ from place to place and may also be affected by the weather surrounding the wind turbine. One of the issues that affect the conditions of the ambient air may be the moisture content of the air, where the moisture content may differ from place to place and may differ from day to day based on the weather. Thus, when ambient air is utilised to provide cooling for a wind turbine, either in direct cooling or using a heat exchanger, the moisture content has an effect of the cooling capacity, and moisture can be detrimental to the components that are to be cooled, such as the heat exchanger or other components.

Thus, there has been a need to control the moisture content of the ambient air where moisture separators have been provided upstream of components to attempt to reduce, limit or eliminate moisture from the ambient air, prior to the air entering the cooling equipment. This has been successfully done by providing a plurality of rib walls for deflecting humid air flow, thereby allowing the water vapour or droplets to be slung out of the air flow due to the deflected air flow.

However, such moisture separators have an air passage where the flow of air cannot be controlled. In order to solve this problem, mist eliminators have been provided where a damper has been positioned upstream from the mist eliminator, where the damper can open and close the airflow through the mist eliminator. This means that in order to control the flow of air, an additional component must be added in front of the mist eliminator, this additional component requiring both space and weight on a mechanical construction and will also add to the complexity of the air flow mechanism prior to the use of the air for cooling purposes.

An object of the present disclosure is to present a solution to wholly or partly overcome the disadvantages and drawbacks of the existing technology.

In accordance with the invention, an air intake damper, comprising a first air intake conduit having a first longitudinal axis and having an upstream end and a downstream end is provided, the first intake conduit having a first intake area, where the first intake area is substantially perpendicular to the first longitudinal axis, a plurality of partitions extending across the first intake area, where each partition has at least an upstream end and a downstream end and having an first surface and/or an second surface, where in a first position two adjacent partitions are positioned to define a first fluid communication channel having an upstream end and a downstream end extending along the first air intake conduit, where the fluid communication channel in a direction extending along the first longitudinal axis has at least one bend so that an imaginary straight line extending from the upstream end to the downstream end will intersect at least the first surface and/or the second surface of at least one partition
where in a second position two adjacent partitions are positioned to prevent fluid communication between the upstream end and the downstream end of the first air intake conduit.

In accordance with the present disclosure, the first intake area may be a two-dimensional area intended to create a plane that covers the air intake area of the damper. The first intake area may be bound on the sides by a side wall or a periphery defined by a housing or part of an air intake channel. The first intake area may be seen as a plane, where the longitudinal axis of the air intake damper may be a normal to the plane, or where a normal to the plane is parallel to the longitudinal axis.

Within the understanding of the present application the plurality of partitions may be positioned parallel to each other in at least their first position and/or their second position, where an axis extending along the height of a first partition may extend parallel to an axis extending along the height of a second partition.

Within the understanding of the present disclosure, the plurality of partitions may extend from one side of the first intake area and/or first intake conduit and towards an opposite side of the first intake area and/or the first intake conduit. Thus, one partition may separate a first transverse side of the first intake area and/or the first intake conduit from another side of the first intake area and/or the first intake conduit.

Within the understanding of the present disclosure, the term bend may be understood as a change in the direction of a fluid communication channel, where a first and/or a second partition may be utilised to deflect the stream of fluid in a direction that is not the same as the direction of the stream of fluid when it enters the air intake damper and/or the fluid communication channel. The term bend may be understood as a form that may be a curved form or an angular form.

This means that the air intake damper is capable of utilising the partitions in two different manners, where in the first position the partitions may be utilised as a moisture/mist eliminator and where in the second position the partitions may be utilised to close off the air communication from the upstream end to the downstream end of the air intake damper in order to prevent air from passing through the damper. Thus, it is possible to provide a damper which also functions as a mist eliminator, and where the positioning of the partitions and the movement of the partitions allow the damper to have a physical size that is similar to a traditional mist eliminator, without having to add a closing mechanism at the upstream end of the air intake damper. Thus, it is possible to save space and weight, as the partitions can both be used to close off the fluid communication as well as diverting the air via the fluid communication channels to sling out the moisture and/or droplets of the air stream.

The partition may have first wall, where the first surface is one side of the wall and the second surface on the opposite side of the wall. The partition may be made out of a sheet material, where the sheet material defines the wall of the partition.

The two adjacent partitions may be positioned side by side, so that a first surface of a first partition and a second surface of a second partition are positioned so that they face each other, and define a fluid communication channel, that extends from an upstream end of the first intake conduit and towards the downstream end of the first intake conduit. Thus, the first intake conduit may be divided into one or more fluid communication channels, defined by two or more partitions.

By providing a bend in the fluid communication channel, the bend being of the kind where an imaginary straight line cannot pass the channel without intersecting either the first wall and/or the second wall of the partitions, it is ensured that the stream of air is deflected sufficiently to ensure that the inertia of the moisture in the airstream causes the moisture to continue its straight path, while the air is deflected along the fluid communication channel. Thus, it is ensured that none of the air can travel through the first fluid communication channel without be deflected. When air travels along a straight path at a given velocity, the moisture molecules will have a higher density than the air molecules, which means that if the air is deflected, the moisture molecules will continue their straight path for a longer distance than the lighter air molecules. This causes the moisture molecules to collide with the first surface and/or the second surface of the partitions, causing the moisture molecules to cling to the wall, and when enough moisture molecules have gathered, the molecules will form into liquid, and where the liquid will cling flow along the first and/or the second surface via gravity away from the first intake conduit.

Within the understanding of the present disclosure, the moisture molecules may be in the form of droplets, drops and/or two or more moisture molecules that are attached to each other.

This will ensure that the moisture molecules are reduced from the airstream, and when the airstream passes the downstream end of the air intake conduit, it may be utilised for cooling, where the risk of the moisture damaging the mechanical equipment is reduced.

Furthermore, by providing the partitions to be moveable between the first position and the second position, in the first position, the damper may provide an airstream to be utilised for cooling, where in their second position the partitions will block the first air intake conduit and prevent the air from passing through the conduit. In their second position, the partitions may form a wall, where adjacent partitions may overlap each other, where a first fall of one partition may come into contact with the second wall of the adjacent partition.

By providing an air intake damper in accordance with the present disclosure, it is possible to reduce the physical size of the equipment required to protect the components that need to be cooled, as well as reduce the physical footprint and the weight of the components needed to protect the components.

The partition may comprise a second longitudinal axis, where the longitudinal axis in the first position may be parallel to the first longitudinal axis of the first intake conduit.

Within the meaning of the present disclosure, the term "an imaginary straight line extending from the upstream end to the downstream end will intersect at least an inner surface and/or an outer surface of at least one partition" means that a straight line cannot pass through the fluid communication channel without coming into contact with a wall of a partition. This means that the air cannot pass through the fluid communication in a straight line and has to be deflected to pass through the fluid communication channel. The term may also mean that a ray of light cannot pass through the fluid communication channel without reflecting of one of the walls. This means that if a light source is positioned at the upstream end, the light source cannot be seen through the fluid communication channel.

In one exemplary embodiment, the air intake damper may comprise an air intake damper housing, where the housing has an upstream end and a downstream end, and at least one side wall, where the side wall may define at least part of the air intake conduit. Thus, the housing may provide a base part of the air intake damper, where the housing may define one or more of the air intake conduits, the downstream end of the conduit and/or the damper, the upstream end of the conduit and/or damper. The partitions may be configured to be attached to the housing, where an upper end (first end) and/or a bottom end (second end) of the partition, may be adjacent to the housing. Thus, the partitions may define sides of the fluid communication channel, while the housing may define an upper part and/or a lower part of the fluid communication channel.

In one exemplary embodiment, a plurality of partitions may be pivotally connected to an air intake damper housing, where the plurality of partitions may be capable of pivoting between the first position and the second position. Each partition may be pivotally connected to the air intake damper housing, where the upper end of the partition and the lower end of the partition may be adjacent to an inner wall of the housing, and where the partition may divide the first intake area from one side of the housing to the opposite side of the housing. The partitions may be configured to pivot along a pivotal axis that is substantially perpendicular to the first longitudinal axis, and where the pivotal axis may be parallel to the first intake area or the plane of the first intake area.

In the first position, the upstream end of the partition may be positioned close to the upstream end of the first intake conduit, and the downstream end of the partition may be positioned close to the downstream end of the fist intake conduit. Thus, in the first position the second longitudinal axis of the partition may be pivoted relative to the longitudinal axis so that the second longitudinal axis will intersect the first longitudinal axis. The pivoting causes the partition to be transformed from its first position, and the pivoting may manoeuvre the partition towards its second position. This may mean that the first surface or the second surface of the partition may be rotated towards the upstream end or the downstream end of the first intake conduit, where the first wall and/or the second wall will provide a blockage to the air intake conduit, thereby reducing the airflow through the first intake conduit. When the partition has been pivoted into its second position, the wall may provide substantially complete blockage of the first intake conduit and prevent air from passing through the air intake conduit. Thus, in the second position, the fluid communication channel will be blocked, and the air cannot travel through the fluid communication channel.

The pivotal axis of the first partition may be parallel to the pivotal axis of the second partition, and parallel to any subsequent partition.

In one exemplary embodiment, at least two of the plurality of partitions may be configured to pivot in synchronicity between the first position and the second position and vice versa. This may mean that two or more partitions may be pivoted simultaneously from their first position and towards their second position. This may mean that the fluid communication channel may be altered during the pivotal movement, where the angle of the fluid communication channel may follow the second longitudinal axis of the partitions. Thus, it may be possible to change the shape of the fluid communication channel by pivoting the partitions.

In one exemplary embodiment, in the first position of the partitions, the bends may be aligned along a transverse axis, where the transverse axis is perpendicular to the longitudinal axis. The transverse axis may extend from one side of the first intake conduit to the opposite side of the first intake conduit. In the first position, the transverse axis may intersect the first partition and the second partition in the same position, where the angle of the intersecting axis is identical in the first partition and the second partition. This means that in the first position the first partition may be parallel to the second partition, so that the angle of the first surface of one partition follows the angle of the second surface of the adjacent partition. Thus, the distance between a central axis of the first partition and the second partition may be substantially identical to the distance between the upstream ends and the downstream ends of the partition. The central axis of the partition may extend along a central area of the partition, where the central area of the partition is positioned between the first wall and the second wall of the partition.

In one exemplary embodiment, the first fluid communication channel, seen in a cross-sectional view, may have at least two bends, where the first bend may extend in a first direction and the second bend may extend in a second direction, the second direction may optionally extend in an opposite direction to the first direction. This means that the first fluid communication channel may be configured to provide a stream of air with at least two deflections. Thus, if a stream of air passes through the fluid communication channel, the stream will be deflected in a first direction and may subsequently be deflected in a second direction. This may ensure that any moisture that has not been slung out of the airstream at the first deflection may be slung out at the second deflection.

In one exemplary embodiment, two adjacent partitions may be positioned in a third position to define a fluid communication channel having an upstream end and a downstream end, where the first bend and/or the second bend may be at an angle that is more than 140 degrees. The angle may be defined from an axis that is parallel to the first surface and/or the second surface or may be tangential to the first surface and/or the second surface. Within the understanding of the present disclosure, a straight line defined by two tangents may be at an angle that is 180 degrees or where the tangents or lines are parallel or coaxial to each other. Thus, the angle 180 degrees may be found on both sides of the angle. However, where a reduction in the angle will cause the angle at one side to reduce, while causing the other to increase, as the angles will always sum up to 360 degrees. When the angle is reduced, one of the tangents or straight lines of the wall may be angled in a direction towards the other tangent or straight line of the wall in an angular direction. An angle that is more than 140 degrees may define a bend that is relatively dull, which may limit the moisture elimination to relatively large moisture particles when the air passes the bends of the fluid communication channel.

In one exemplary embodiment, in the first position, the first bend and/or the second bend of the first fluid communication channel may be at an angle that is less than 140 degrees, measured in a direction of the longitudinal axis. This means that the angle of the first and/or the second bend, or any subsequent bend may be relatively sharp, and where the bend may cause a relatively acute change in direction of the airstream when the airstream passes the bend. A relatively sharp bend may cause smaller moisture particles to be slung from the airstream during the passage past the bend of the fluid communication channel.

By having at least two bends, where one bend may be more blunt than the other bend, and where the bends are in opposite directions, it may be possible to catch different size particles in each of the bends, and due to the fact that a first bend has diverted the air in the opposite direction to the second bend, the second bend may be more sharp than the first bend, as the flow direction of the air may be changed from when the flow passes the first bend.

In one exemplary embodiment, the first bend and/or the second bend in the second position may be less than 90 degrees. The 90 degrees may be measured from two surfaces that face each other. This means that the bend in the second position of the partitions may be acute relative to each other. The first line may be angled at between 80 and 90 degrees relative to the longitudinal axis, where at least a part of the partition is at an angle that is between 80 and 90 degrees relative to the longitudinal axis. Thus, at least part of the partition may thereby extend across at least part of the air intake area, thereby preventing air from passing through that area. At least part of the wall of the second partition may be similarly angled and may extend across at least a different part of the intake area, where the two partitions block a part of the intake area together. This may be repeated for subsequent partitions, causing the entire air intake area to be blocked. One part of the wall that defines the angle of less than 90 degrees may be positioned on a downstream side of the bend, where the other part is positioned on an upstream side of the bend and may be configured to block the first intake area.

In one exemplary embodiment, each partition may have a first partition part and a second partition part, where the first partition part may be pivotally connected to the second partition part. Thus, one partition may be constructed out of at least two parts, a first partition part and a second partition part. The first partition part and the second partition part may be connected to each other via a pivotal connection, where the first part may pivot relative to the second part. Thus, when the first part pivots relative to the second part, the angle between the first part and the second part changes, where the angle may be increased on one side of the pivotal connection and may be decreased on the opposite side of the pivotal connection. The pivotal connection may be utilised to change the angle of the bend during use or in the transition between the first position and the second position.

In one exemplary embodiment, each partition may have third partition part, where the third partition part may be pivotally connected to the first portion part and/or the second partition part. Thus, one partition may be constructed out of at least three parts, where the first partition part may be pivotally connected to another partition part, and the second partition part may be pivotally connected to the first partition part and the third partition part. The pivotal connection between the partition part may be utilised to change the angle of one or more of the bends of the fluid communication channel during the use of the air intake damper or may be utilised in the transition between the first position and the second position of the partition.

In one exemplary embodiment, the first bend, the second bend or any subsequent bend may be a smooth bend or a sharp bend. The bends may be in the form of smooth bends, where the change in angle occurs gradually from one side of the bend to the opposing side of the bend in the longitudinal direction. Thus, the bend may have a wave form, i.e. a sinusoidal form. Alternatively, or additionally, one or more of the bends may have a sharp bend, where the change in angle between from a first side of the bend to the opposite side of the bend in a longitudinal direction may occur at once, or substantially instantaneously. This may be the case where the partition may be made out of partition parts that are straight but attached to each other at an angle. The angle between the partition parts may be measured on either transverse side of the partition.

In one exemplary embodiment, the partitions may be configured to be manoeuvred from the first position to the second position and from the second position to the first position. This means that the partitions may be utilised to open the fluid communication channel and close the fluid communication channels through the first intake conduit at the choice of the user. Thus, when a user wants to close the first intake conduit, the partitions may be manoeuvred into their second position, and when the user wants to open the first intake conduit, the user can manoeuvre the partitions back to their first position.

In one exemplary embodiment, the air intake damper may be mounted on a wind turbine or be mounted to a heat exchanger that may be mounted to a wind turbine. The air intake damper may be positioned on a first face of a nacelle of a wind turbine facing the wind direction of the wind turbine. The air intake damper may be positioned in a side wall, bottom wall and/or an end wall of a nacelle of a wind turbine, or in any suitable position on a nacelle of a wind turbine. Alternatively or additionally, the air intake damper may be positioned on or in the tower of the wind turbine.

### Brief description of the drawings

The following is an explanation of exemplary embodiments with reference to the drawings, in which:
Fig. 1 shows a wind turbine having a heat exchanger and an air intake damper in accordance with the present disclosure,
Fig. 2A and 2B show front view of an air intake damper in accordance with the present disclosure where the partitions are in their first position and their second position, respectively,
Fig. 3A and 3B show a top cross-sectional view of an air intake damper in accordance with the present disclosure where the partitions are in their first position and their second position, respectively, and
Fig. 4A, 4B and 4C show a top cross-sectional view of an air intake damper taken along line III-III in Fig. 2A in accordance with the present disclosure where the partitions are in their first position, their second position and their third position, respectively.

### Detailed description

Various exemplary embodiments and details are described hereinafter with reference to the figures when relevant. It should be noted that the figures may or may not be drawn to scale and that elements of similar structures or functions are represented by like reference numerals throughout the figures. It should also be noted that the figures are only intended to facilitate the description of the embodiments. They are not intended as an exhaustive description of the disclosure or as a limitation on the scope of the disclosure. In addition, an illustrated embodiment needs not have all the aspects or advantages shown. An aspect or an advantage described in conjunction with a particular embodiment is not necessarily limited to that embodiment and can be practiced in any other embodiments even if not so illustrated, or if not so explicitly described.

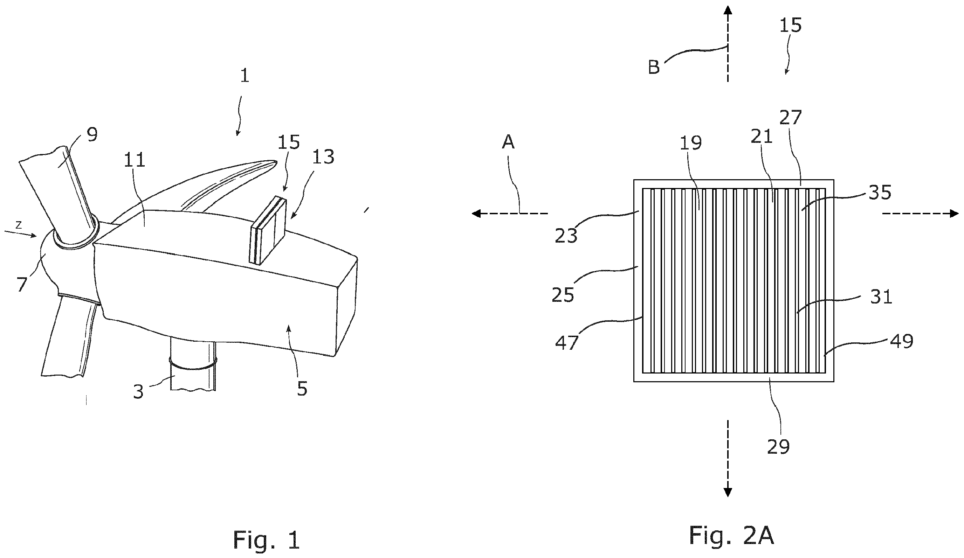

Fig. 1 shows a perspective view of a wind turbine 1, where the wind turbine 1 comprises a tower 3, a nacelle 5, a rotor 7 and wings 9. The nacelle 5 has a first face 11, where a heat exchanger 13 may be mounted to the first face 11 of the nacelle. The heat exchanger follows the rotation of the nacelle into the wind direction z, so that the cooling area of the heat exchanger 13 extends substantially perpendicular to the wind direction Z. In an upstream position of the heat exchanger 13, an air intake damper 15 may be mounted, where the air intake damper 15 is configured to control the flow of air into the heat exchanger 13, where the damper 15 may e.g. be open to allow air to pass into the heat exchanger 13 or may be closed to prevent air to pass into the heat exchanger 13. The air intake damper 15 may have a first intake area (not shown) that is substantially similar to the air intake area of the heat exchanger 13.

Fig. 2A shows a front view of an air intake damper 15 in accordance with the present disclosure, where the air intake damper 15 comprises a housing 17, where the housing defines a first intake conduit 19 having a first intake area 21. The first intake area 21 or the first intake conduit 19 may be bound by housing walls 23 positioned at opposing transverse sides 25 of the first intake area 21 and at opposing upper side 27 and lower side 29 of the first intake area 21. The first intake area may be two dimensional and may extend along a transverse axis A and a vertical axis B, where the transverse axis may intersect the transverse sides 25 of the housing 17 and where the vertical axis B may intersect the upper side 27 and the lower side 29 of the housing.

The air intake damper 15 may be provided with a plurality of partitions 31, extending across the first intake area 21, where in this example the plurality of partitions 31 extend in a direction parallel to the vertical axis B. In Fig. 2A, the air intake damper may be open, where the partitions 31 are in their first position, where two adjacent partitions 31 provide a fluid communication channel 33 extending from the upstream end 35 of the first intake conduit 19 towards a downstream end 37 of the first intake conduit 19 and may be defined by a first surface 39 of a first partition 31 and a second surface 41 of a second partition.

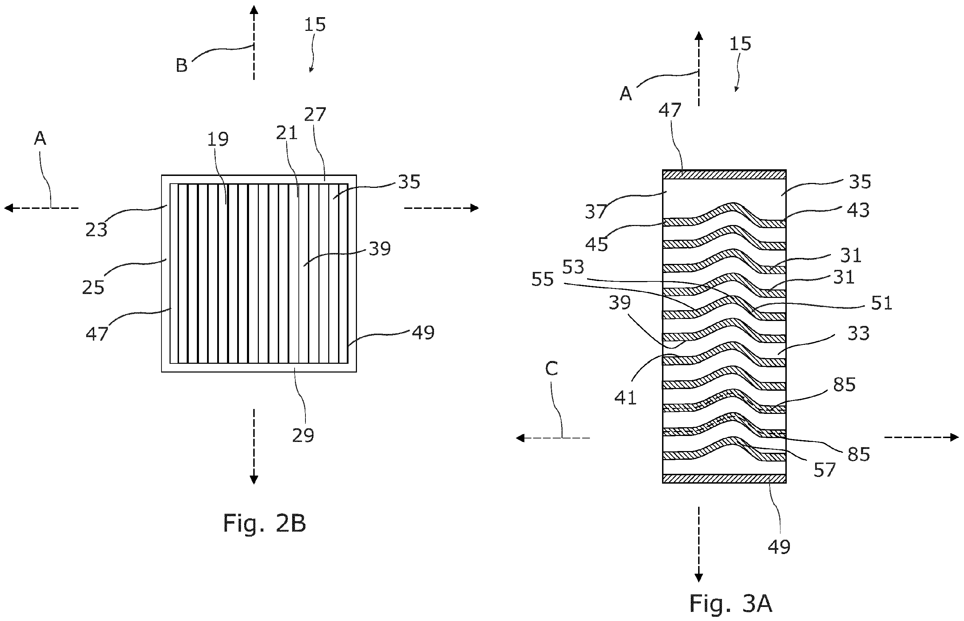

Fig. 2B shows a front view of the intake damper 15 seen in Fig. 2B, where the partitions 31 have been manoeuvred into their second position, where the partitions 31 prevent fluid communication between the upstream end 35 and the downstream end 37 of the first air intake conduit 19. Thus, the air intake damper 15 may close off any flow of air between an upstream end 35 of the first intake conduit and the downstream end 37 of the first intake conduit, thereby preventing air from e.g. entering a heat exchanger that may be positioned downstream of the intake damper 15. By moving the partitions 31 into their second position, the partitions may have an outer surface facing the upstream end that is substantially similar to the area of the first intake area 21. This may mean that a first surface area 39 of a partition 31 may be in contact with a second surface area 41 of a second partition, thereby providing partitions 31 that abut each other to block the airflow through the first intake conduit 19..

Fig. 3A shows a top sectional view of an air intake damper taken along line III seen in Fig. 2A, where the air intake damper comprises a plurality of partitions 31, where the partitions 31 are shown in their first position, where two adjacent partitions 31 define a fluid communication channel 33 that extends from an upstream end 43 of the partition towards a downstream end 45 of the partition 31. The air intake damper comprises a first air intake conduit 19 that extends from an upstream end 39 towards a downstream end 41 of the fluid conduit (or the housing). The partitions 31 are positioned adjacent to each other from a first transverse side 47 towards a second transverse side 49 of the air intake conduit 19, and are spaced apart in a direction parallel to the transverse axis A.

The partitions 31 extend from an upstream end 43 towards a downstream end 45, where two adjacent partitions 31, in the first position of the partitions 31, define a first fluid communication channel 33 extending from an upstream end 35 of first intake conduit towards a downstream end 37 of first intake conduit 19. The fluid communication channel 33 extends in a direction parallel to the longitudinal axis C of the first intake conduit 19 and is provided with at least a first bend 51, which is formed by two adjacent partitions 31 configured to deflect the flow of air through the fluid communication channel 33. The first bend 51 causes the flow of air to deflect in a transverse direction towards the first transverse side 45 and is configured to cause any moisture present in the flow of air to be slung out of the flow of air and onto a first surface 39 or a second surface 41 of a partition 31. The fluid communication channel 33 and the at least first bend 51 are formed in such a manner that an imaginary straight-line X extends into the fluid communication channel 33 and will intersect a first surface 39 and/or a second surface 41 of a partition 31. Thus, by providing the fluid communication channel 33 with a bend 51 that ensures that no straight line can pass through the channel 33 without intersecting the side walls 39, 41, it is ensured that all of the air flow through a channel 33 will be deflected, in one way or the other, causing moisture molecules in the airstream to be flung out of the deflected airstream due to the inertia of the heavier water/moisture molecules.

In this example, the fluid communication channel 33 may be provided with a second bend 53, as well as a third bend 55, where the second bend 53 deflects the flow of air in the opposite transverse direction towards the second transverse side 49, causing another deflection of the air, and where further moisture molecules can be slung out of the flow of air through the fluid communication channel 33. The third bend 55 may deflect the flow of air in the opposite direction of the second bend 53, in a direction towards the first transverse side 47, causing another deflection of the airflow, and further moisture molecules can be slung out of the flow of air, and where the third bend 55 may be configured to direct the flow of air back in a direction that is substantially parallel to the longitudinal axis C of the first intake conduit 19, and where the flow of air may exit the downstream end 37 of the first intake conduit 19 and may be used to enter a cooling device, such as a heat exchanger 13 as shown in Fig. 1.

The distance between a central axis D of the first partition 31 and the second partition 31 may be substantially identical to the distance between the upstream end tow and the downstream end of the partition. The central axis of the partition may extend along a central area 85 of the partition 31, where the central area 85 of the partition is positioned between the first wall and the second wall of the partition.

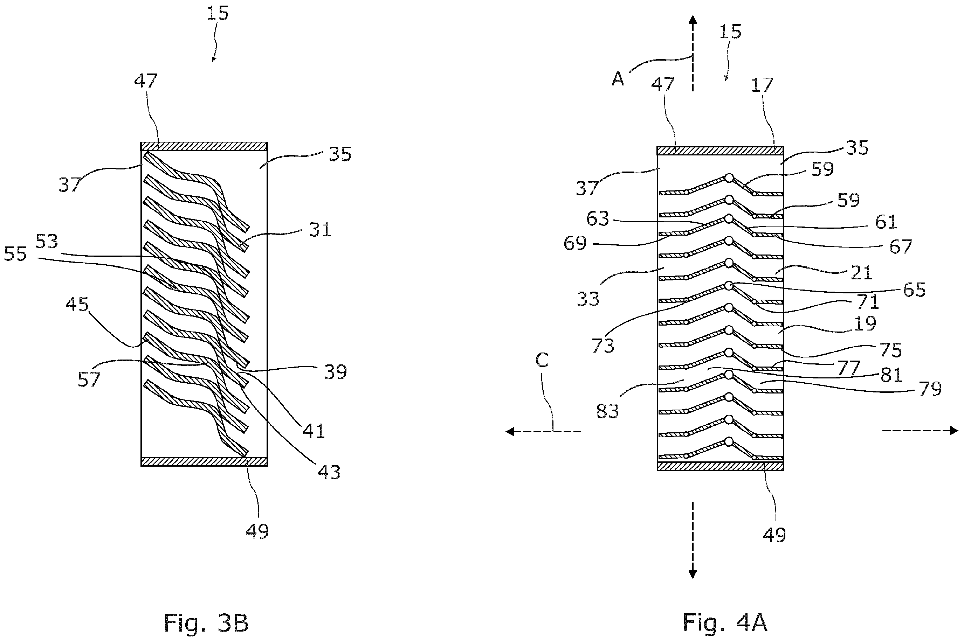

Fig. 3B shows the partitions 31 in their second position, where two adjacent partitions 31 are positioned to prevent fluid communication between the upstream end 35 and the downstream end 37 of the first intake conduit 19, thereby closing off the first intake area 21 of the air intake damper 15. The transformation of the partitions 31 from their first position (as seen in Fig. 3A) towards their second position (as seen in Fig. 3B) may be done by moving the partitions 31 relative to the longitudinal axis C of the first intake conduit 19. In this example, the partitions 31 have been pivoted along a pivotal axis (not shown) where the pivotal axis is parallel to the vertical axis B, where the upstream end of a partition 31 has been manoeuvred in a direction towards the first transverse side 47, and the downstream end 45 of a partition has been manoeuvred in a direction towards the second transverse side 49. Thus, the pivotal axis of the partition 31 may be positioned in an area that is in a central longitudinal area 57 of the partition, where the central longitudinal area is positioned between the upstream end 43 and the downstream end 45 of the partition 31. Alternatively, the pivotal axis may be positioned close to the upstream end 43 or the downstream end, where the movement of the partition 31 is primarily the opposite end of the partition to the first transverse side 47 or the second transverse side 49. By manoeuvring the partitions 31 into their second position, the first surface 39 of one partition 31 may abut a second surface 41 of an abutting partition 31, thereby preventing air from passing through the abutting surfaces 39, 41. Furthermore, the upstream end 43 of the most transverse partition towards the second transverse side 49 may abut the second transverse side, and the downstream end of the most transverse partition towards the first transverse side 47 may abut the first transverse side 47, thereby fully closing off the first intake area 21 of the first intake conduit 19.

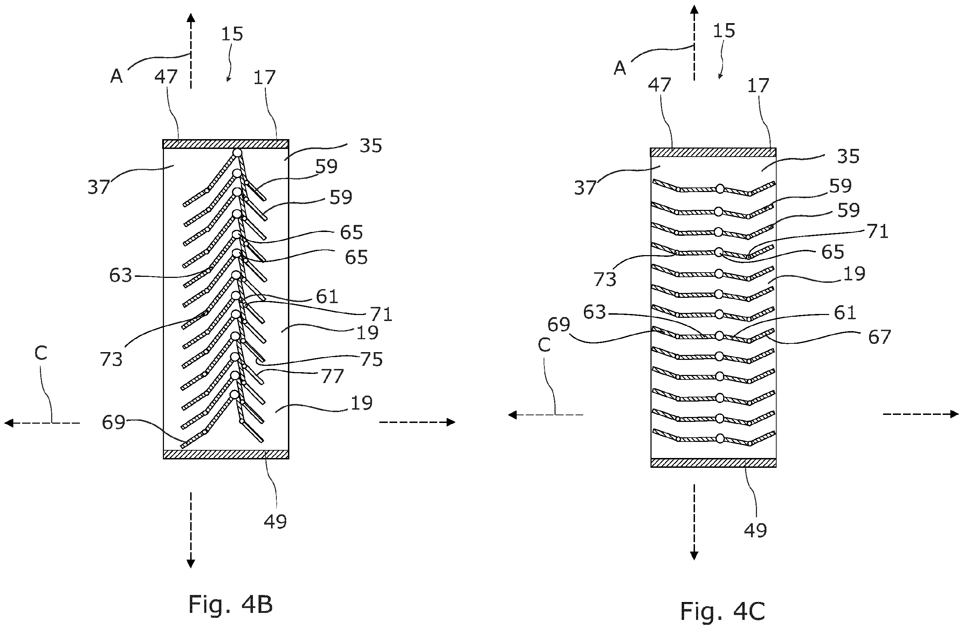

Fig. 4A shows an alternative embodiment of the air intake damper 15, where the partitions 59 are formed in a different manner to what is shown in Fig. 3A and 3B, while the housing 17, first intake conduit 19 and the housing walls 23 are similar to that shown in Fig. 3A and 3B and will have the same reference numbers. The partitions 59 may be formed out of a first partitions part 61, a second partition part 63, where the first partition part 61 and the second partition part 63 are pivotally connected to each other via a pivotal connection 65. Thus, the first partition part 61 may face the upstream end 35 while the second partition part may face the downstream end 37. The pivotal connection 65 may have a pivotal axis parallel to the vertical axis B, allowing the first partition part 61 to be pivoted relative to the second partition part 63. The partition 59 may further comprise a third partition part 67 and a fourth partition part 69, which are connected to their adjacent partition parts 61 and 63 via a second 71 and a third 73 pivotal connection. The pivotal connections 69, 71, 73 may extend across the first intake area 21 and may extend from the upper side 27 towards the lower side 29. The upper side 27 and the lower side 29 may be provided with rails, grooves or other guiding means (not shown) allowing the pivotal connections 69, 71, 73 to be manoeuvred in directions defined by the longitudinal axis C and the transverse axis A, so that the movement of one or more of the pivotal connections 69, 71, 73 may be utilised to move the partitions 59 from their first position (as seen in Fig. 4A) towards their second position (as seen in Fig. 4B).

In Fig. 4A, the partitions may be in their first position, where the partitions 59 define a fluid communication channel 33 extending between a first surface 75 of one partition and a second surface 77 of an adjacent partition 59. The fluid communication channel 33 extends in a direction parallel to the longitudinal axis C of the first intake conduit 19 and is provided with at least a first bend 79, which is formed by two adjacent partitions 59, configured to deflect the flow of air through the fluid communication channel 33. The first bend 79 causes the flow of air to deflect in a transverse direction towards the first transverse side 45 and is configured to cause any moisture present in the flow of air to be slung out of the flow of air and onto a first surface 75 or a second surface 77 of a partition 59. The fluid communication channel 33 and the at least first bend 79 are formed in such a manner that an imaginary straight-line X extends into the fluid communication channel 33 and will intersect a first surface 75 and/or a second surface 77 of a partition 59. Thus, by providing the fluid communication channel 33 with a bend 79 that ensures that no straight line can pass through the channel 33 without intersecting the side walls 75, 77, it is ensured that all of the air flow through a channel 33 will be deflected, in one way or the other, causing moisture molecules in the airstream to be flung out of the deflected airstream due to the inertia of the heavier water/moisture molecules. The fluid communication channel 33 may be provided with a second bend 81 and subsequent bends 83, similar to that disclosed in relation to Fig. 2A.

Fig. 4B shows the partitions 59 in their second position, where the partitions 59 close off the first intake conduit 19 of the air intake damper 15. The pivotal connection 65 of all the partitions 59 has been manoeuvred in a transverse direction towards the first transverse side 47, causing the angle between the first partition part 61 and the second partition part 63 to change and become less than 90 degrees, and/or V-shaped. The pivotal connections have been manoeuvred so that the first surface 75 of the first partition part 61 comes into contact with the second surface 77 of an adjacent partition 59, and thereby preventing air from travelling through the fluid communication channel 33. The second and third pivotal connections 71,73, have been manoeuvred accordingly in a longitudinal direction and/or transverse direction to allow the first pivotal connection to come into the position shown in Fig. 4B. The fourth partition part 69 may be configured to abut the second transverse side 49 of the first intake conduit 19 to prevent air from passing the partitions 59 at the transverse side. The first pivotal connection 65 may further be configured to abut the first transverse side 47 of the first intake conduit 19 to prevent air from passing the partitions 59 at the transverse side.

Fig. 4C shows the air intake damper of Fig. 4A and 4B where the partitions 59 are in a third position, where the pivotal connections 65, 71, 73 and the partition parts 61, 63, 67, 69 have been moved so that there is a low-pressure loss of air from the upstream end 35 of the first intake conduit 19 through the fluid communication channel 33 and towards the downstream end 37.

The use of the terms "first", "second", "third" and "fourth", "primary", "secondary", "tertiary" etc. does not imply any particular order but are included to identify individual elements. Moreover, the use of the terms "first", "second", "third" and "fourth", "primary", "secondary", "tertiary" etc. does not denote any order or importance, but rather the terms "first", "second", "third" and "fourth", "primary", "secondary", "tertiary" etc. are used to distinguish one element from another. Note that the words "first", "second", "third" and "fourth", "primary", "secondary", "tertiary" etc. are used here and elsewhere for labelling purposes only and are not intended to denote any specific spatial or temporal ordering.

Furthermore, the labelling of a first element does not imply the presence of a second element and vice versa.

It is to be noted that the word "comprising" does not necessarily exclude the presence of other elements or steps than those listed.

It is to be noted that the words "a" or "an" preceding an element do not exclude the presence of a plurality of such elements.

It should further be noted that any reference signs do not limit the scope of the claims.

Although features have been shown and described, it will be understood that they are not intended to limit the claimed invention, and it will be made obvious to those skilled in the art that various changes and modifications may be made without departing from the spirit and scope of the claimed invention. The specification and drawings are, accordingly, to be regarded in an illustrative rather than restrictive sense. The claimed invention is intended to cover all alternatives, modifications, and equivalents.

### List of references

- 1: Wind turbine
- 3: Tower
- 5: Nacelle
- 7: Rotor
- 9: Wings
- 11: First face of nacelle
- 13: Heat exchanger
- 15: Air intake damper
- 17: Housing
- 19: First intake conduit
- 21: First intake area
- 23: Housing walls
- 25: Transverse sides of first intake area
- 27: Upper side of first intake area
- 29: Lower side of first intake area
- 31: Partitions
- 33: Fluid communication channel
- 35: Upstream end of first intake conduit
- 37: Downstream end of first intake conduit
- 39: First surface of partition
- 41: Second surface of partition
- 43: Upstream end of partition
- 45: Downstream end of partition
- 47: First transverse side
- 49: Second transverse side
- 51: First Bend
- 53: Second bend
- 55: Third bend
- 57: Central longitudinal area
- 59: Partition
- 61: First partition part
- 63: Second partition part
- 65: First pivotal connection
- 67: Third partition part
- 69: Fourth partition part
- 71: Second pivotal connection
- 73: Third pivotal connection
- 75: First surface of partition
- 77: Second surface of partition
- 79: First bend
- 81: Second bend
- 83: Third bend
- 85: Central area
- A: Transverse axis
- B: Vertical Axis
- C: Longitudinal Axis
- D: Central axis
- Z: Wind direction

## Claims

1. An air intake damper, comprising:
- a first air intake conduit having a first longitudinal axis and having an upstream end and a downstream end, the first intake conduit having a first intake area, where the first intake area is substantially perpendicular to the first longitudinal axis,
- a plurality of partitions extending across the first intake area, where each partition has at least an upstream end and a downstream end and has a first surface and/or a second surface,
- where in a first position
- two adjacent partitions are positioned to define a first fluid communication channel having an upstream end and a downstream end extending along the first air intake conduit, where the fluid communication channel in a direction extending along the first longitudinal axis has at least one bend so that an imaginary straight line extending from the upstream end to the downstream end will intersect at least an inner surface and/or an outer surface of at least one partition,
- where in a second position
- two adjacent partitions are positioned to prevent fluid communication between the upstream end and the downstream end of the first air intake conduit.

2. An air intake damper according to claim 1, wherein the air intake damper may comprise an air intake damper housing, where the housing has an upstream end and a downstream end and at least one side wall, where the side wall may define at least part of the air intake conduit.

3. An air intake damper according to claim 2, wherein the plurality of partitions are pivotally connected to the air intake damper housing, where the plurality of partitions are capable of pivoting between the first position and the second position.

4. An air intake damper according to claim 3, wherein at least two of the plurality of partitions are configured to pivot in synchronicity between the first position and the second position and vice versa.

5. An air intake damper according to any one of the preceding claims, wherein in the first position (each of) the bends are aligned along a transverse axis, where the transverse axis is perpendicular to the longitudinal axis.

6. An air intake damper according to any one of the preceding claims, wherein the first fluid communication channel, seen in a cross-sectional view, has at least two bends, where the first bend extends in a first a first direction and the second bend extends in a second direction, where the second direction may optionally extend in an opposite direction to the first direction.

7. An air intake damper according to any one of the preceding claims, wherein two adjacent partitions are positioned in a third position to define a fluid communication channel having an upstream end and a downstream end, where the first bend and/or the second bend are at an angle that is more than 140 degrees.

8. An air intake damper according to any one of the preceding claims, wherein the first bend and/or the second bend of the first fluid communication channel in the first position are at an angle that is less than 140 degrees, measured in a direction of the longitudinal axis.

9. An air intake damper according to any one of the preceding claims, wherein the first bend and/or the second bend in the second position may be less than 90 degrees.

10. An air intake damper according to any one of the preceding claims, wherein each partition may have a first partition part and a second partition part, where the first partition part is pivotally connected to the second partition part.

11. An air intake damper according to claim 10, wherein each partition may have third partition part, where the third partition part is pivotally connected to the first partition part and/or the second partition part.

12. An air intake damper according to any one of the preceding claims, wherein the first bend, the second bend or any subsequent bend may be a smooth bend or a sharp bend.

13. An air intake damper according to any one of the preceding claims, wherein the partitions are configured to be manoeuvred from the first position to the second position, and from the second position to the first position.

14. An air intake damper according to any one of the preceding claims, wherein each partition is formed from a sheet material.

15. An air intake damper according to any one of the preceding claims, wherein the air intake damper is mounted on a wind turbine or mounted to a heat exchanger that is mounted to a wind turbine.
